(19) Europäisches Patentamt
European Patent Office
Office européen des brevets

(11) Numéro de publication : **0 434 568 A1**

# (12) DEMANDE DE BREVET EUROPEEN

(21) Numéro de dépôt : 90403719.9

(22) Date de dépôt : 20.12.90

(51) Int. Cl.$^5$ : **A01N 47/34,** // (A01N47/34, 41:12, 37:34)

(30) Priorité : 22.12.89 FR 8917131

(43) Date de publication de la demande :
26.06.91 Bulletin 91/26

(84) Etats contractants désignés :
AT CH DE ES IT LI

(71) Demandeur : PENNWALT FRANCE S.A.
1, rue des Frères Lumière, BP 9
F-78373 Plaisir Cédex (FR)

(72) Inventeur : Courtade, Michel
32 Allée du Lac Spérieur
F-78110 Le Vesinet (FR)
Inventeur : Constant, Bernard, Résidence
l'Etoile
Bâtiment C. 1 Chemin des Amaryllis
F-13012 Marseille (FR)
Inventeur : Ramel, Georges, Lot des
Constansounes
Chemin du Puit de la Figuière
F-13340 Rognac (FR)

(74) Mandataire : Rinuy, Santarelli
14, avenue de la Grande Armée
F-75017 Paris (FR)

(54) Compositions fongicides ternaires pour le traitement du mildiou de la vigne.

(57) La présente invention a pour objet une nouvelle composition fongicide pour le traitement du mildiou de la vigne.

Elle consiste en une composition de trois fongicides actifs connus comprenant un dicarboximide, comme le folpel, un acétamide comme le cymoxanil, et un isophtalonitrile halogéné comme le chlorothalonil, dans des proportions déterminées.

Ces compositions ternaires permettent de diminuer notablement la quantité totale de matière active fongicide dans l'application envisagée.

EP 0 434 568 A1

Jouve, 18, rue Saint-Denis, 75001 PARIS

## COMPOSITIONS FONGICIDES TERNAIRES POUR LE TRAITEMENT DU MILDIOU DE LA VIGNE

La présente invention concerne de nouvelles formulations de compositions fongicides utiles pour le traitement de la vigne, en particulier pour lutter contre le mildiou, le black-rot et l'excoriose.

Pour lutter contre ces maladies cryptogamiques qui attaquent les ceps au moment de l'apparition des feuilles, de la floraison ou du développement des grappes de raisin, les vignerons ont été amenés à faire appel à un certain nombre de produits fongicides mis à leur disposition par les industriels.

C'est ainsi que sont utilisés actuellement couramment comme fongicides pour le traitement de la vigne aussi bien des dérivés du type dicarboximide, comme le "folpel" et le "captafol", qui sont respectivement du trichlorométhylthio-2-iso-indoline-dione-1,3 et du N-(tétrachloro-1,1,2,2-éthylthio)-tétrahydro-3a,4,7,7a-iso-indoline-dione-1,3, que des dérivés de l'acétamide, comme le "cymoxanil", qui est le 2-cyano-N-(éthylaminocarbonyl)-2-(méthoxyimino)acétamide, ce dernier n'étant toutefois pas utilisé seul mais uniquement en association avec de nombreux fongicides classiques.

Par exemple, des compositions associant le "cymoxanil" avec différents fongicides ont été mises sur le marché, pour la même application, notamment des combinaisons de "captafol" et de "cymoxanil" ou des combinaisons de "folpel" et de "cymoxanil".

Toutefois, ces différentes formulations d'agents fongicides peuvent devenir inefficaces sur le plan biologique du fait de l'apparition de souches de champignons résistantes, et c'est la raison pour laquelle le viticulteur est toujours à la recherche de nouvelles associations.

La présente invention a pour objet de nouvelles compositions fongicides mettant en oeuvre trois agents fongicides différents, à savoir un dérivé du type dicarboximide, un dérivé de l'acétamide et un dérivé du type isophtalonitrile halogéné.

Cette dernière catégorie de fongicides, illustrée par le tétrachloro-isophtalonitrile, connu sous la dénomination de "chlorothalonil", comprend des agents connus pour leur activité contre les champignons, mais dont aucun d'entre eux n'a jamais été homologué pour le traitement de la vigne.

En effet, les isophtalonitriles halogénés sont utilisés uniquement pour le traitement fongicide des maladies des céréales, comme le blé, ou de différents légumes, comme la pomme de terre, la tomate, le melon, le céleri et la betterave.

Mais ils n'ont jamais trouvé de débouché pour le traitement de la vigne par suite de l'apparition de phénomènes de phytotoxicité, comme la formation de rugosités (russetting) sur les grains et une diminution de la taille des grains de raisin, qui les rendent impropres à cette utilisation.

Or la Demanderesse a découvert que des compositions aqueuses ternaires associant en combinaison des proportions équivalentes en poids de dérivés du type dicarboximide et de dérivés du type isophtalonitrile halogéné avec une proportion relative de 15 à 50% en poids d'un dérivé d'acétamide par rapport au poids de l'un ou l'autre des deux premiers dérivés ci-dessus, permettaient d'obtenir des résultats intéressants, notamment pour le traitement du mildiou de la vigne.

Les compositions selon l'invention consistent en une composition aqueuse comprenant entre 100 et 300 g, de dérivé fongicide du type dicarboximide, comme le "folpel" ou le "captafol", entre 100 et 300 g de dérivé du type isophtalonitrile halogéné, comme le "chlorothalonil", et entre 15 et 150 g de dérivé d'acétamide, comme le "cymoxanil" par litre.

Selon une mise en oeuvre préférée de la présente invention, la composition comprend environ 200 g de "folpel", environ 200 g de "chlorothalonil" et environ 60 g de "cymoxanil" par litre.

Exemple

Pour obtenir l'homologation officielle d'une composition selon l'invention, une expérimentation a été effectuée avec la formulation suivante, dite "VIGNOR 2L", de densité 1,26, dans laquelle les proportions sont indiquées en poids :

| | |
|---|---|
| - "folpel" technique à 97 % | 16,73 % |
| - "chlorothalonil" technique à 98 % | 16,55 % |
| - "cymoxanil" technique à 95 % | 5,12 % |
| - émulgateur | 2,03 % |
| - stabilisant/dispersant | 8,23 % |
| - antigel | 4,06 % |
| - épaississant | 0,25 % |
| - antimousse | 0,65 % |
| - eau | 46,38 % |

L'expérimentation de cette nouvelle formulation a comporté deux types d'essais, comme l'exige le Ministère de l'Agriculture pour l'homologation des spécialités agricoles :

- une expérimentation de sélectivité destinée à vérifier l'innocuité de la formulation sur la culture à protéger, à savoir la vigne en l'occurrence ;
- et une expérimentation d'efficacité destinée à mesurer le contrôle de la maladie de la vigne par l'application de la nouvelle formulation.

## A. Expérimentation de sélectivité

Selon la méthodologie retenue par le Ministère de l'Agriculture, des essais ont été effectués en utilisant :
- la dose/hectare dont l'homologation est demandée, soit 2 litres/hectare de la formulation ci-dessus, et
- 1,5 fois cette dose/hectare, soit 3 litres/ hectare de la composition ci-dessus, pour vérifier qu'en cas de surdosage accidentel, ou en cas de recouvrement du traitement, la sélectivité de la formulation est satisfaisante et ne montre pas de symptômes de phytotoxicité.

Cette expérimentation de sélectivité a été réalisée sur les principaux cépages français artificiellement infestés par du mildiou dans des stations d'expérimentation, à raison de trois essais sur Cabernet Sauvignon, un essai sur Merlot, un essai sur Gamay, un essai sur Pinot noir, un essai sur Folle blanche, deux essais sur Grenache, deux essais sur Carignan, un essai sur Alicante Bouchet et, sous abri, sur Alphonse Lavallée et sur Lival.

Dans tous les cas, on n'a obtenu aucune trace de phytotoxicité sur feuilles ou sur grappes, ce qui confirme la parfaite sélectivité de la formulation selon l'invention.

On suppose que la faible dose de chlorothalonil combinée avec les autres matières actives présentes dans la formulation VIGNOR 2L, selon l'invention, a permis d'éliminer les causes de phytotoxicité généralement observées avec l'emploi du chlorothalonil seul ou en mélange.

## B. Expérimentation d'efficacité

Selon la méthodologie retenue par le Ministère de l'Agriculture, des essais ont été effectués avec la formulation indiquée ci-dessus :
- en plein champ dans diverses stations d'expérimentation et sur les mêmes cépages que ceux retenus pour les essais de sélectivité ;
- et en station de brumisation en plein champ où l'on peut réaliser des infestations artificielles de mildiou pour juger au mieux de l'efficacité de la formulation.

Dans cette expérimentation, la formulation indiquée ci-dessus a été comparée, pour le contrôle du mildiou, avec les spécialités homologuées pour cet emploi en France, à savoir le "Dithane M45" et la "Rémiltine".

Le "Dithane M45" est une spécialité en poudre à base de Mancozèbe contenant 80% de ce produit comme matière active ; cette spécialité est retenue par le Ministère Français de l'Agriculture comme produit de comparaison à utiliser comme étalon dans ce type d'expérimentation : le "Dithane M45" a été utilisé dans les essais comparatifs à la dose à laquelle cette spécialité a été homologuée pour le traitement du mildiou, à savoir 3 500 grammes de produit commercial à l'hectare, ce qui correspond à 2 800 grammes de Mancozèbe qui est la matière active.

La "Rémiltine" est une spécialité en poudre contenant 46,5% en poids de Mancozèbe et 4% en poids de "cymoxanil" et la dose utilisée dans les essais comparatifs a été de 3 000 grammes de produit commercial à l'hectare, ce qui correspond à 1395 grammes de Mancozèbe et 120 grammes de "cymoxanil", soit 1515 grammes de matière active à l'hectare.

La formulation selon l'invention utilisée à raison de 2 litres à l'hectare avait la composition indiquée ci-dessus, ce qui correspond à une dose de 400 grammes de "folpel", 400 grammes de "chlorothalonil" et 120 grammes de "cymoxanil", soit un total de 920 grammes de matière active à l'hectare.

Les résultats de cet essai figurent sur les tableaux 1, 2 et 3 ci-après.

Il résulte de ces essais que, tant l'efficacité sur les grappes (tableau 1) que l'efficacité sur les feuilles (tableaux 2 et 3) de la formulation selon l'invention, identifiée par la mention "VIGNOR 2L", s'est avérée particulièrement intéressante.

Ce résultat est d'autant plus remarquable que la formulation ainsi expérimentée comportait une proportion de matières actives qui était diminuée de 67,12% par rapport à la composition ne comportant que du Mancozèbe et diminuée de 39,27% par rapport à une association comportant la même dose de "cymoxanil" à l'hectare.

La composition selon la présente invention représente donc, à efficacité égale, une économie notable en matières actives par rapport à une composition analogue actuellement disponible dans le commerce.

# TABLEAU 1
## Attaques sur grappes
### Synthèse des pourcentages d'efficacité des produits

| ESSAIS | VIGNOR 2 L | | REMILTINE | | DITHANE M 45 | | INFESTATION TEMOIN | |
|---|---|---|---|---|---|---|---|---|
| | % effic.att sur grappes | % efficacité grappes att. | % efficacité att.s/grappes | % efficacité grappes att. | % efficacité att.s/grappes | % efficacité grappes att. | % m attaque sur grappes | % grappes attaquées |
| MG1 - Brum. 87 | 95,3 | 82,4 | 96,3 | 83,4 | 89,8 | 63,1 | 80,5 | 100 |
| MG2 - Brum. 87 | 96,2 | 79,3 | 93,7 | 78,2 | 88,3 | 62,2 | 87,86 | 100 |
| MG - Brum. 88 : le 3.08<br>25.08 | 99,2<br>97,7 | 97,2<br>90 | 99,2<br>86,6 | 94,4<br>57,4 | 97,5<br>84,8 | 86,4<br>50,4 | 86,9<br>89 | 100<br>100 |
| JONQUERETTES | 99,1 | 97,8 | 93,3 | 87,9 | 94,8 | 91,2 | 17,5 | 22,7 |
| CUCURON | 98,5 | 95,4 | 93,2 | 87,2 | 91,2 | 80 | 25,2 | 27,5 |
| ORANGE : le 18.05.88<br>29.07.88 | 98,8<br>98,6 | 94,5<br>95,4 | 83,6<br>86,4 | 71,2<br>74,8 | 90,9<br>92,8 | 82,5<br>86,5 | 44,8<br>89,2 | 60<br>98,5 |
| ST. ANDEOL : 13.07.88<br>1.08.88 | 97,4<br>93,5 | 85,6<br>72,5 | 96,4<br>91,6 | 82,9<br>62 | 99,3<br>92,8 | 89,5<br>81,5 | 88,1<br>100 | 93,7<br>100 |
| BEAUCAIRE | 99,4 | 96,6 | 96,8 | 80,3 | 97,1 | 82,8 | 81,5 | 90,2 |
| ARVEYRES | 99,2 | 97,3 | 96,2 | 88,3 | 78,1 | 57,2 | 79,9 | 97,8 |
| ST. GERVAIS : 8.07.88<br>1.08.88 | 99,2<br>98,1 | 96,4<br>92,5 | 98,3<br>96,2 | 91,4<br>83 | 91<br>88,5 | 78,2<br>67 | 62,8<br>82,3 | 99<br>100 |
| MOYENNES | 97,8 % | 90,9 % | 93,4 % | 80,1 % | 91,2 % | 75,6 % | 72,5 % | 84,9 % |

EP 0 434 568 A1

## Tableau 2

## Attaques sur feuilles : Essais réalisés en

## station de brumisation

## Synthèse des pourcentages d'efficacité des formules

| ESSAIS | VIGNOR 2 L | REMILTINE | DITHANE M.45 | INFESTATION TEMOIN |
|---|---|---|---|---|
|  | % efficacité | % efficacité | % efficacité | % attaque |
| MG1 brumisation 87 |  |  |  |  |
| 26.07 | 93,7 | 93,1 | 92,8 | 70 |
| 10.09 | 93,7 | 89,4 | 77,9 | 97,5 |
| MG2 brumisation 87 |  |  |  |  |
| 27.07 | 96,4 | 94,8 | 91,6 | 75 |
| 11.09 | 94,3 | 90,7 | 79,3 | 94,5 |
| Jeunes plants brumisation 87 |  |  |  |  |
| 04.08 | 98,8 | 97,3 | 79,6 | 53 |
| 15.09 | 96,3 | 95,7 | 85,3 | 96,2 |
| 12.10 | 93,3 | 91,6 | 78,4 | 98,2 |
| HG brumisation 88 |  |  |  |  |
| 02.08 | 93,6 | 91,5 | 85,2 | 95 |
| 27.09 | 90,8 | 87,3 | 78,6 | 98,5 |
| Jeunes plants brumisation 88 |  |  |  |  |
| 23.08 | 93,7 | 90,9 | 88,8 | 60 |
| 06.09 | 94,2 | 92,3 | 66 | 87 |
| 05.10 | 93,4 | 89,9 | 62,4 | 96,2 |
| MOYENNES | 94,3 % | 92 % | 80,4 % | 85 % |

EP 0 434 568 A1

## Tableau 3

## Attaques sur feuilles : Essais réalisés en plein champ

## Synthèse des pourcentages d'efficacité des formules

| ESSAIS | VIGOR 2 L | REMILTINE | DITHANE M45 | INFESTATION TEMOIN |
|---|---|---|---|---|
| | % efficacité | % efficacité | % efficacité | % d'attaque |
| JONQUERETTES (84)<br>– le 28.07.88<br>– le 1.09.88 | 98,4<br>97,8 | 70,6<br>77,4 | 80,4<br>77,2 | 25,9<br>55,5 |
| CUCURON (84)<br>– le 16.07.88<br>– le 8.09.88 | 97,4<br>88,5 | 85,5<br>77,3 | 77,1<br>70,4 | 37,25<br>62,7 |
| ORANGE (84)<br>– le 28.07.88<br>– le 10.09.88 | 99,6<br>97 | 38,3<br>57,7 | 46,9<br>64,7 | 21,6<br>42,2 |
| BOURG ST. ANDEOL (07)<br>– le 17.06.88<br>– le 13.07.88 | 99,5<br>91,4 | 97,8<br>85,3 | 98,6<br>92 | 42<br>59,8 |
| BEAUCAIRE (30)<br>– le 7.07.88<br>– le 30.08.88 | 96,4<br>91,5 | 89,8<br>79,7 | 92,8<br>88,9 | 85<br>71 |
| ARVEYRES (33)<br>– le 20.07.88<br>– le 30.08.88 | 98,6<br>97 | 96,6<br>95,5 | 84,8<br>80,5 | 93,3<br>96,25 |
| ST. GERVAIS (33)<br>– le 26.07.88<br>– le 30.08.88 | 95,8<br>94,6 | 96,3<br>93,5 | 90,4<br>86,8 | 91,25<br>95,5 |
| MOYENNES | 95,9 % | 81,5 % | 80,8 % | 62,8 % |

## Revendications

1. Composition fongicide ternaire contenant un dérivé actif du type dicarboximide, un dérivé actif du type acétamide, caractérisée en ce qu'elle comporte également un dérivé actif du type isophtalonitrile halogéné.

2. Composition selon la revendication 1, caractérisée en ce que le dérivé actif du type dicarboximide est la trichlorométhylthio-2-iso-indoline-dione-1,3 ou la N-(tétrachloro-1,1,2,2-éthylthio)-tétrahydro-3a,4,7,7a-iso-indoline-dione-1,3.

3. Composition selon la revendication 1 ou 2, caractérisée en ce que le dérivé actif du type acétamide est le 2-cyano-N-(éthylaminocarbonyl)-2-(méthoxyimino)-acétamide.

4. Composition selon l'une quelconque des revendications précédentes, caractérisée en ce que le dérivé actif du type isophtalonitrile halogéné est le tétrachloro-isophtalonitrile.

5. Composition selon l'une quelconque des revendications précédentes, caractérisée en ce qu'elle consiste en une composition aqueuse comprenant des proportions équivalentes en poids de dérivé du type dicarboximide et de dérivé du type isophtalonitrile halogéné et une proportion relative de 15 à 50% en poids de dérivé du type acétamide.

6. Composition selon la revendication 5, caractérisée en ce qu'elle consiste en une composition aqueuse comprenant entre 100 et 300 g de dérivé du type dicarboximide, entre 100 et 300 g de dérivé du type isophtalonitrile halogéné et entre 15 et 150 g de dérivé d'acétamide par litre.

7. Composition selon la revendication 6, caractérisée en ce qu'elle comprend environ 200 g de trichlorométhylthio-2-iso-indoline-dione-1,3, environ 200 g de tétrachloro-isophtalonitrile et environ 60 g de 2-cyano-N-(éthylaminocarbonyl)-2-méthoxyimino)-acétamide par litre.

8. Application d'une composition fongicide ternaire faisant l'objet de l'une quelconque des revendications précédentes au traitement de la vigne contre les champignons, notamment contre le mildiou.

EP 0 434 568 A1

**Office européen des brevets**    **RAPPORT DE RECHERCHE EUROPEENNE**    Numero de la demande

EP 90 40 3719

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-A-2 552 867 (E.I. DU PONT DE NEMOURS AND CO.)<br>* Revendications 1,6; page 5, lignes 20-23,25-26; page 8, ligne 27 - page 9, ligne 2; page 13, ligne 20 - page 14, ligne 5 *<br>--- | 1-8 | A 01 N 47/34 //<br>(A 01 N 47/34<br>A 01 N 41:12<br>A 01 N 37:34 ) |
| Y | FR-A-2 445 693 (S.I.P.C.A.M.)<br>* Page 1, lignes 1-21; page 5, lignes 15-35; page 7, lignes 20-26; page 11, lignes 4-11; revendications 1,11-12 *<br>----- | 1-8 | |

**DOMAINES TECHNIQUES RECHERCHES (Int. Cl.5)**

A 01 N

Le présent rapport a été établi pour toutes les revendications

| Lieu de la recherche | Date d'achèvement de la recherche | Examinateur |
|---|---|---|
| LA HAYE | 21-03-1991 | MUELLNERS W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

9